# EUROPEAN PATENT APPLICATION

(11) **EP 2 169 930 A1**
(43) Date of publication of application: **31.03.2010**
(21) Application number: 09161841.3
(22) Date of filing: 03.06.2009
(51) Int. Cl.: H04M 3/42, H04N 7/15

(54) **Method and apparatus for provisioning a communication device automatically**

(30) Priority: 19.09.2008 US 284305
(71) Applicant: Mitel Networks Corporation, Ottawa, ON K2K 2W7 (CA)
(72) Inventor: Erb, Paul Andrew, Ottawa Ontario K1N 6M5 (CA)
(74) Representative: Derry, Paul Stefan

(57) **Abstract**

A method, apparatus and system for provisioning a communication device in communication with a switch within a communication system is provided. A registration request is received from the communication device at the switch. A device identifier is assigned to the communication device, the device identifier uniquely identifying the communication device to the switch. An address identifier is derived for the communication device based on the device identifier and a string associated with at least the switch, such that the communication device is registered within the communication system via the address identifier in order to initiate and receive communications via the communication system. The device identifier, the string and the address identifier may be stored in a database in communication with the switch.

## Description

The specification relates generally to communication systems, and specifically to a method and apparatus for provisioning a communication device.

To provide phone service to a communication device, such as a telephony appliance, it is first necessary to configure the communication device in a communication system as both a physical device and a service endpoint. Device configuration includes a device identification number and physical and/or behaviour attributes for the communication device. A service endpoint configuration includes a DN (directory number or network address) and call handling or behaviour attributes for a user and/or role associated with a device. COS/COR (class of service/class of restriction) configuration is also generally required for the device, and the user, in combination or separately.

However, configuration of the communication device as both a device and a service endpoint consumes system resources and, some instances, involves licensing fees for both operations, which represents significant overhead. For example, when provisioning a "hosting" communication device for Hot Desking (where a user logs into the "hosting" communication device to obtain service), these devices are not specifically associated with any given user. However, in order for the communication device to receive a dial-tone, in the event that a given user is not currently logged in, an arbitrary user must be configured for the "hosting" device: i.e. a DIN (device identification number) and DN must be assigned with possibly limited call handling attributes and a restrictive COS/COR setting. However, this consumes system resources (and possibly licenses).

While one solution is to not configure the communication device at all, such that calls can not be made or received at the communication device unless a user is logged in, this is undesirable in the event that access to emergency call services (e.g. e-911) calls is needed.

Embodiments are described with reference to the following figures, in which:
Fig. 1 depicts a system for provisioning a communication device, according to a non-limiting embodiment;
Fig. 2 depicts a method for provisioning a communication device, according to a non-limiting embodiment;
Figs. 3 depicts a function for deriving a directory number, according to a non-limiting embodiment; and
Fig. 4 depicts a system for provisioning a communication device, according to a non-limiting embodiment.

A first aspect of the specification provides a method for provisioning a communication device in communication with a switch within a communication system. The method comprises receiving a registration request from the communication device at the switch. The method further comprises assigning a device identifier to the communication device, the device identifier uniquely identifying the communication device to the switch. The method further comprises deriving an address identifier for the communication device based on the device identifier and a string associated with at least the switch, such that the communication device is registered within the communication system via the address identifier in order to initiate and receive communications via the communication system.

The method can further comprise assigning common call handling attributes to the communication device, the common call handling attributes for association with any derived address identifier within the communication system. The common call handling attributes can comprise at least one of a class of service configuration and a class of restriction configuration.

The device identifier can be chosen from a plurality of unique device identifiers associated with the switch. The plurality of unique device identifiers can be organized in a list and the device identifier can be chosen from the plurality of unique device identifiers by choosing the next available unique device identifier in the list.
The registration request can comprise a type identifier identifying the communication device as a given type, and the device identifier can be chosen from a plurality of unique device identifiers which have been associated with the given type.

The method can further comprise authenticating the communicating device based on data included in the registration request.

The method can further comprise receiving additional registration data, and assigning a new address identifier to the communication device based on the additional registration data, such that such that the communication device can be identified via the new address identifier within the communication system. The additional registration data can comprise at least one of log-in data received via an input device associated with the communication device, the log-in data used to identify the new address identifier within a database in the communication system, and administrator data.

The method can further comprise detecting that the communication device has been disconnected from the switch and one of: unregistering the communication device within the communication system such that the device identifier and the address identifier can be assigned to another communication device; or reserving the device identifier and the address identifier for assignment to the communication device when another registration request can be received from the communication device.

Deriving an address identifier can be further based on a switch identifier uniquely identifying the switch within a plurality of switches. The string can be associated with the plurality of switches.

The method can further comprise transmitting the address identifier to the communication device for at least one of display and storage of the address identifier at the communication device.

A second aspect of the specification provides a switch for provisioning a communication device in communication with a switch within a communication system. The switch comprises an interface for receiving a registration request from the communication device. The switch further comprises a processing unit. The processing unit is enabled for assigning a device identifier to the communication device, the device identifier uniquely identifying the communication device. The processing unit is further enabled for deriving an address identifier for the communication device based on the device identifier and a string associated with at least the switch, such that such that the communication device is registered within the communication system via the address identifier in order to initiate and receive communications via the communication system.

The switch can further comprise a memory for storing the string.

The interface can be further enabled for communication with a database for storing the string and the address identifier.

The processing unit can be further enabled for assigning common call handling attributes to the communication device, the common call handling attributes for association with any derived address identifier within the communication system.

The interface and the processing unit can be further enabled for detecting that the communication device has been disconnected from the switch and one of: unregistering the communication device within the communication system such that the device identifier and the address identifier can be assigned to another communication device; or reserving the device identifier and the address identifier for assignment to the communication device when another registration request is received from the communication device.

A third aspect of the specification provides a communication system for provisioning a communication device. The communication system comprises a switch. The switch comprises an interface for receiving a registration request from the communication device. The switch further comprises a processing unit. The processing unit is enabled for assigning a device identifier to the communication device, the device identifier uniquely identifying the communication device. The processing unit is further enabled for deriving an address identifier for the communication device based on the device identifier and a string associated with at least the switch, such that such that the communication device is registered within the communication system via the address identifier in order to initiate and receive communications via the communication system. The communication system further comprises a database, in communication with the switch via the interface, the database for storing the device identifier, the string and the address identifier, the switch further enabled to transmit the address identifier to the database for storage and retrieval.

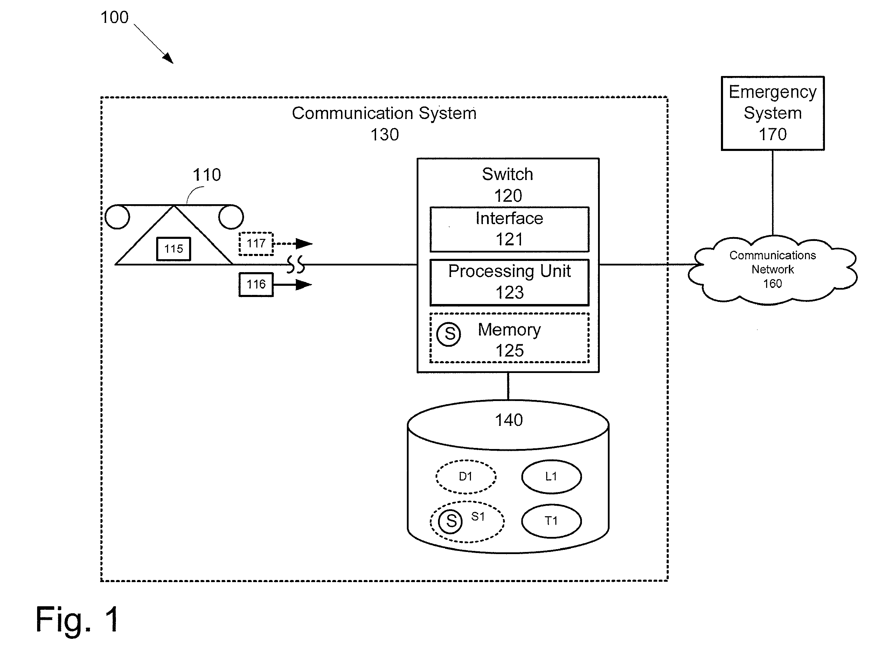

Figure 1 depicts a system 100 for provisioning a communication device 110 in communication with a switch 120. The communication device 110 and the switch 120 are generally elements of a communication system 130. The switch 120 is generally enabled to provision the communication device 110 such that the communication device 110 can communicate via the communication system 130. For example, the switch 120 is generally enabled to provision the communication device 110 with a Device Identification Number (DIN) and a Dialling Number (DN), as known to a person of skill in the art. However, the switch 120 is further enabled to provision the communication device 110 with a DIN and a derived DN (DDN), wherein the DDN is derived from the DIN and a dialling/routing string associated with the switch 120, as will be described below.

The system 100 further comprises a communications network 160. In some embodiments, the system 100 further comprises an emergency system 170 (e.g. a 911 centre) in communication with the communications network 160. In general, the switch 120 is enabled to receive a call, for example a call for emergency services, from the communication device 110 and route the communication to the emergency system 170, presuming that the communication device 110 is provisioned within the communication system 130. However, it is understood that the depiction of the emergency system 170 in Figure 1 is merely exemplary, and that calls can be made to other types of systems and/or any suitable communication device internal or the external to the communication system 130. Furthermore, the presence or absence of the emergency system 170 in the system 100 is not to be considered particularly limiting.

The communication device 110 comprises any suitable communication device, including but not limited to a telephonic apparatus, a wireless telephonic apparatus, a computing device enabled to communicate via the communications system 130 and/or a combination. The communication device 110 can comprise an input device 115 for receiving input, which can comprise DN's of other communication devices and/or log-in data.

The switch 120 comprises any suitable switch, including but limited to an Integrated Communications Platform, PBX switch, a router, and the like. For example, the switch 120 can comprise a MITEL 3300 ICP from Mitel Networks, 350 Legget Drive, Kanata, Ontario, Canada K2K 2W7. The switch 120 comprises a suitable communications interface 121 enabling the switch 120 to communicate with the communication device 110 and the communications network 160, such that communications between the communications device 110 and the emergency system 170 can be routed via the communications network 160. For example, the interface 121 generally comprises suitable switching and/or routing elements. The switch further comprises a processing unit 123 enabled for provisioning communication devices. In particular, the processing unit 123 is enabled to assign a DIN to the communication device 110 when the switch 120 receives a registration request 116, for example by retrieving a next available DIN from a database 140, as described below. In some embodiments, the switch 120 can comprise the database 140. In some embodiments, the switch 120 further comprises a memory 125 for storing a dialling/routing string S associated with at least the switch 120. In other embodiments, the dialling/routing string S can be stored at the database 140 in association with the switch 120. In some of these embodiments, the string S1 can be stored in a table S1 described below.

Further, the switch 120 is generally configured with a switch DN (SDN), such that when the communication device 110 initiates a call to a communication device external to the communication system 130, (e.g. the communication device 110 calls the emergency system 170), the call is identified as originating from the SDN, at an extension represented by the DDN. For example, if the SDN is 613-555-1234, and the DDN is 654601, then the emergency system 170 would identify the call as originating from 613-555-1234 x 654601. In addition, the communication device 110 is callable at the SDN, using the DDN as an extension.

In some embodiments, the communication system 130 can comprise a local communication system, for example local to a given building and/or a given organization (e.g. a business, and the like). However, it is understood that the communication system 130 can comprise a plurality of buildings and/or locales and/or organizations. Furthermore, it is understood that the communication system 130 can comprise a plurality of switches similar to the switch 120, and/or a plurality of communication devices similar to the communication device 110. The communication system 130 can comprise any suitable communication system including, but not limited to, an Integrated Communications Platform, a PBX, an intranet, the Internet, the PSTN, a WLAN, a LAN and/or a combination.

In any event, the communication device 110 and the switch 120 are in communication within the communications system 130; however the communication device 110 and the switch 120 can be co-located or remote from each other as desired. The communication system 130 can hence further comprise other elements (not depicted) for enabling communication between the communication device 110 and the switch 120 including but not limited to wiring, connectors, routers, etc.

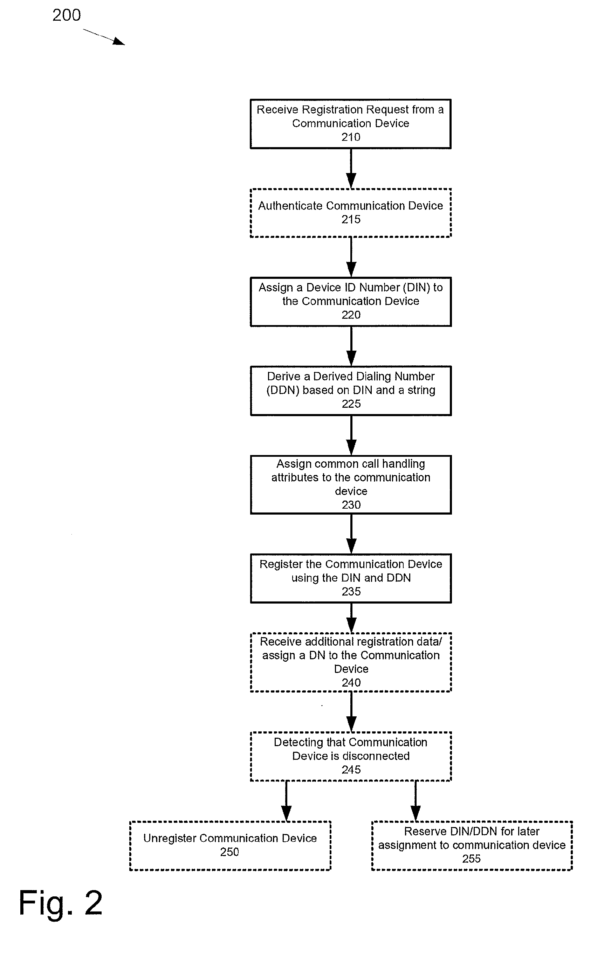

When the communication device 110 is connected to the switch 120, the communication device 110 transmits a registration request 116 to the switch 120, the registration request 116 comprising an identifier of the communication device 110 (e.g. a MAC address). At this point, the system 100 performs the method 200 for provisioning a communication device in communication with a switch, as depicted in Figure 2, described hereafter.

Hence, attention is directed to Figure 2, which depicts the method 200. In order to assist in the explanation of the method 200, it will be assumed that the method 200 is performed using the system 100. Furthermore, the following discussion of the method 200 will lead to a further understanding of the system 100 and its various components. However, it is to be understood that the system 100 and/or the method 200 can be varied, and need not work exactly as discussed herein in conjunction with each other, and that such variations are within the scope of present embodiments.

At step 210, the switch 120 receives the registration request 116 from the communication device 110.

In an alternative step 215, the communication device 110 is authenticated. For example, the identifier of the communication device 110 can be compared to a list D1 (see Figure 1) of identifiers of communication devices that have been authorized to communicate via the communication system 130. In some embodiments, the list D1 can be provisioned by an administrator. For example the list D1 can comprise a list of MAC addresses of communication devices that have been authorized to communicate via the communication system 130 and the switch 120 compares the MAC address received from the communication device 110 against the list D1. In some non-limiting embodiments, step 215 can alternatively comprise comparing a security code provided by the communication device 110 with a stored security code stored in the switch 120 and/or the database 140. If the security code matches the stored security code, the communication device 110 is authenticated.

At step 220, a DIN is assigned to the communication device 110. For example, the database 140 can comprise at least one list of available DINs stored, for example, in a List L1. In some embodiments, the switch 120 retrieves the next available DIN in the List L1. In some embodiments, the List L1 comprises:

| DIN |
|---|
| 600 |
| 601 |
| 602 |
| 701 |
| 702 |
| 703 |

In these embodiments, the List L1 comprises a column containing the DINs. However, the format of the List L1 is not to be considered limiting, and the data in the List L1 can be stored in the database 140 in any suitable format. In some embodiments, the List L1 can further comprise an indication of whether a DIN has been assigned.

In some embodiments, the DIN assigned to the communication device 110 can be unique to the switch 120, but the DIN is not necessarily unique within the communication system 130. For example, as described below, the same DIN can be assigned to another communication device in the communication system 130, the another communication device connected to a switch other than the switch 120.

In some embodiments, the DINs in the List L1 can be pre-configured for assignment to specific device types. In some embodiments, the device type of the communication device 110 can be stored in the list D1 in association with its MAC address, while in other embodiments the registration request 116 further comprises the device type. Hence, the device type of the communication device 110 can be determined by processing the registration request 116 and/or by looking up the device type in the list D1. In specific non-limiting embodiments, the List L1 comprises:

| DIN | Device Type |
|---|---|
| 600 | 5330 |
| 601 | 5330 |
| 602 | 5330 |
| 701 | 5340 |
| 702 | 5340 |
| 703 | 5340 |

In these embodiments, the List L1 comprises a first column containing the DINs and second column indicating the device type to which the associated DIN has been pre-configured. However, the format of the List L1 is not to be considered limiting, and the data in the List L1 can be stored in the database 140 in any suitable format.

At step 225, the switch 120 derives a DDN for the communication device 110 based on the DIN and the dialling/routing string S associated with at least the switch 120. The dialling/routing string S can comprise any suitable combination of alphanumeric digits. In some embodiments, the string S comprises alpha-numeric digits that can be input into the input device 115.

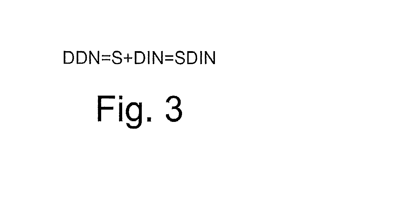

The DDN can be derived from any suitable algorithm and/or function based on the DIN and the string dialling/routing S as inputs, DDN=F(S, DIN), as long as the resulting DDN is unique at least within the switch 120. In some of these embodiments, as depicted in Figure 3, the dialling/routing string S is designated as a prefix and appended to the beginning of the DIN. For example, if the DIN=602 and the string S=654, the DDN=654602. However, other algorithms for generating the DDN are within the scope of present embodiments.

The configuration of the dialling/routing string S can be automatically set by the communication system 130 (e.g. by the processing unit 123) via an appropriate algorithm and/or by an administrator of the communication system 130. Furthermore, the configuration of the string dialling/routing S can be changed as desired, at any appropriate time. However, configuration of a specific dialling/routing string S can be disallowed if it introduces potential conflicts with any previously configured dialling/routing strings in the system (and visa versa). Existing dialling plan configuration practices apply. Such a decision can be made by an administrator of the system 100 and/or automatically by comparing the string S with existing strings used within the system 100. Alternatively, any suitable method for preventing conflicts with any previously configured dialling/routing strings in the system 100 may be used.

At step 230, common call handling attributes are assigned to the communication device 110, the common call handling attributes for association with any DDN within the communication system 130. The common call handling attributes can comprise at least one of a class of service configuration (COS) and a class of restriction configuration (COR). Hence, the common call handling attributes define the allowed calling behaviours of the communication device 110 (e.g. no long distance calls, emergency calls only etc.) In general the common call handling attributes can be configured by an administrator of the communications system 130 and stored in the database 140.

However, in some embodiments, each DDN can be assigned a specific set of call handling attributes, customized for the communication device 110 and/or a group of communication devices.

In some embodiments, the DDN can be supported by the communication system 130 for additional configuration capabilities in place of a DN. For example, the DDN can be enabled as a hunt group member or trunk answer point.

At step 235, the communication device 110 is registered in the communication system communication system via the DDN in order to make and receive calls via the communication system 130. For example, the DDN, the DIN and the common call handling attributes (or a reference to such) are stored in association in the database 140, for example in a Table T1. As described above, the communication device 110 is now reachable as an extension to an SDN associated with the switch 120. Hence, if a call is made to or from the emergency system 170, the communication device 110 is uniquely identifiable in the communication system 130.

Furthermore, the communication device 110 is now configured to make and receive calls (albeit with possible limitations via the common call handling attributes) without a DN being formally assigned to the communication device 110. This saves on system resources and can further save on licensing fees.

In some embodiments, the DDN can be displayed at the communication device 110 once the communication device 110 is registered, for example in embodiments where the communication device 110 comprises a display device. In these embodiments, the switch 120 transmits a message to the communication device 110, the message comprising the DDN. In these embodiments, the communication device 110 is further enabled to display and/or store the DDN, for example in a memory at the communication device 110. Hence, a user of the communication device 110 is provided with the DDN such that the user may provide the DDN to other users, internal and/or external to the communication system 130. Hence, the other users will know how to initiate a communication session with the communication device 110 by using the provided DDN.

In some embodiments, the method 200 further comprises receiving additional registration data 117 at a step 240, and assigning a DN to the communication device 110 based on the additional registration data. The communication device 110 is then identified via the DN within the communication system 130, rather than the DDN. In some of these embodiments, the additional registration data comprises log-in data received via the input device 115. For example, the log-in data can comprise a user identifier and/or a password in a hot-desking environment, as known to a person of skill in the art. Hence, the log-in is processed by the switch 120 to identify the DN to be assigned to the communication device 110: for example, the DN can be looked up within the database 140 based on the log-in data, presuming that the DN and the log-in data have been previously provisioned within the communication system 130 for hot-desking. This scenario further assumes that the communication device 110 and the switch 120 are further enabled for hot-desking.

In other embodiments, the additional registration data 117 can be received from an administrator of the communication system 130 when it is desired that the communication device 110 be formally assigned a DN.

In some embodiments, the method 200 further comprises detecting that the communication device 110 has been disconnected from the switch 120 at step 245. For example, the switch 120 can periodically query the communication device 110 to determine if the communication device is still connected. If no reply to the query is received within a given time period, the switch 120 determines that the communication device 110 has been disconnected. However, other means of detecting if the communication device 110 has been disconnected will occur to a person of skill in the art and are within the scope of present embodiments.

Once it has been determined that the communication device has been disconnected, at least one of several alternative steps can be performed. In a first embodiment, at step 250, the communication device 110 can be unregistered within the communication system 130 such that the DIN and the DDN can be assigned to another communication device at a later time. For example, the registration data for the communication device 110 stored in the database 140 in Table T1 is deleted, and further the DIN is designated as unassigned with the database 140 (e.g. the DIN is either returned to the List L1, and/or designated as unassigned within the List L1).

In a second embodiment, at step 255, the DIN and DDN can be reserved for assignment to the communication device 110 when another registration request 116 is received from the communication device 110 at a later time, for example when the communication device 110 is reconnected to the switch 120. In this embodiment, the previously stored registration information (including the DDN and the DIN) can be stored in association with the MAC address of the communication device 110 (or any other suitable identifier that can be later received in a registration request 116).

In some embodiments, the DDN can be further based on ARS (Automatic Routing System) digits: DDN=F(DIN,S,ARS). For example, as known to a person of skill in the art, ARS digits can be used to directly dial an extension within a communication system from an external communication device, without having to first access an SDN. In these embodiments, if the DIN=601, S=7, and the ARS digits=555, then the DDN=555-7601, presuming that the DDN=ARS+S+DIN.

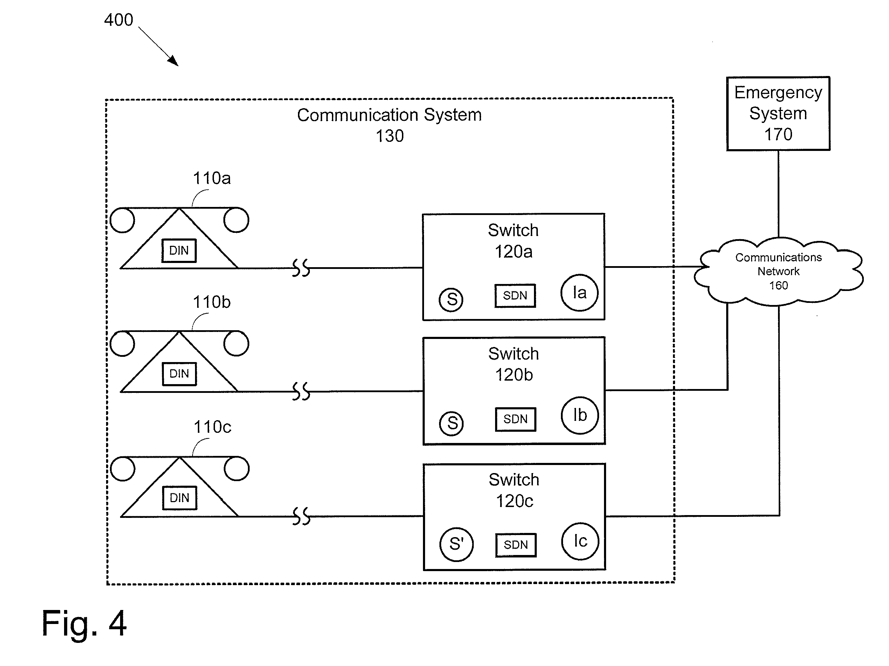

In other embodiments, the DDN can be further based on a switch identifier. For example, attention is now directed to Figure 4, which depicts a system 400 for provisioning a communication device 110a in communication with a switch 120a. The system 400 is substantially similar to the system 100, with like elements having like numbers. The system 400 comprises a plurality of communication devices 110a, 110b, 110c, similar to the communication device 110, and a plurality of switches 120a, 120b, 120c, similar to the switch 120. Further, each switch 120a, 120b and 120c share a common SDN. In some embodiments, the system 400 can also comprise a database similar to the database 140.

In the system 400, both switch 120a and switch 120b are associated with the dialling/routing string S, while the switch 120c is associated with a dialling/routing string S'. Further, each of the communication devices 110 have been assigned a similar DIN as DINs can be unique at a given switch, but not between switches. Hence, a DDN derived from the DIN and the dialling/routing string S can not be unique between the switch 120a and the switch 120b. To address this issue, in these embodiments, the DDN can be further based on a switch identifier (i.e. a Node ID), Ia, Ib and Ic, for each of the switches 120a, 120b and 120c, respectively:
DDN=F(I,S,DDN). For example, if Ia=1, and Ib=2, the DIN=601 and S=7, then the DDN for the communication device 110a can comprise 17601 and the DDN for the communication device 110b can comprise 27601.

While the method 200 has been described with reference to the system 100, the method 200 can be performed in any suitable given system where a device providing a service and a network address (or user identifier) using the service are both present for basic operation of the device. A derived address (e.g. the DDN, a derived network address and/or a derived user identifier) can then be derived via the method 200 such the derived address is unique within the given system.

In a specific non-limiting embodiment, with reference to Figure 1, the communication device 110 can comprise a telephony appliance provisioned in the system 100 with only the device configuration completed (e.g., as a partially provisioned device) and the DIN. The DIN is unique between communication devices at the switch 120. Device configuration can include device type, MAC Address, Physical Location ID (PLID) or any suitable analog/digital telephone circuit identifiers, or CESID (customer emergency service ID), etc. In embodiments where the communication device 110 comprises an IP device, the MAC Address (or equivalent) is generally used, while analog and digital devices generally use the PLID or equivalent.

The string S is configured by a system administrator to ensure DDNs are generated to be unique and reduce the possibility of inter-digit dialling conflicts with normally configured users/DNs. The communication system 130 also disallows configuration of dialling prefix values that would result in any potentially DDN from not being unique with any other potential dialling sequence that is currently valid in the system configuration. Similarly, configurations of other dialling sequences in the system are restricted from conflicting with any potential DDNs. Hence, for example, the method 200 can further comprise a step to ensure that the DDN determined at step 225 is unique by comparing the DDN to other DDNs and DNs already provisioned in the system. If the DDN is not unique, then the string S can be re-configured and/or additional digits can be added to the DDN, such as a switch identifier (i.e. see discussion of Figure 4, above) I.

The DDN configuration can also be programmed by a system administrator to establish the behaviour provided for all partially configured communication devices. Further, appropriate defaults can be used.

When a telephony appliance is first brought into service by the communication system 130, the unique DDN associated with the DIN can be used (i.e. the method 200 performed) to partially configure the telephony appliance. Basic phone service can then be provided as though the telephony apparatus was configured with the common DDN user configuration settings (i.e. common call handling attributes).

In a specific non-limiting example, a dialling prefix of 654 can be configured (i.e. the string S=654, and DDN=F(S+DIN)) and a common DDN user configuration can also configured (with restrictive COS/COR settings). Further, a partially configured telephony appliance is assigned a DIN of 7. When the telephony appliance connects to the communication system it is hence identified with a DDN of 6547. When the receiver is lifted, dial-tone is provided to the telephony appliance. Making an emergency call would identify the caller as 555-1234 x6547, with the SDN of the switch 120 being 555-1234. When the emergency call operator calls back they are connected to the partially configured telephony appliance with a DDN of 6547 (DIN of 7) by the communications system 130. Similarly, another partially configured telephony appliance has a DIN of 710. The DDN associated with the telephony appliance is 654710 when the telephony appliance is involved in calls, and for diagnostics.

The partially configured telephony appliance receives calls using the DDN and is identified by the DDN when making calls (potentially on set displays and/or diagnostic tools). The communication system 130 can suppress display of the DDN as appropriate.

Configuration of a user/DN against a partially configured telephony device (as in a hot-desking environment), can supersede the DDN. The communication system 130 does not provide service to the DDN and instead the configured DN is used (e.g. step 240 of the method 200).

Alternatively, the DDN can be used by the communication system 130 to initiate a call to a fully provisioned device (or for diagnostics), however, call handling configured for the fully provisioned device is applied to the call (i.e. the common call handling attributes of a DDN are not applied).

While the above has been described with reference to a communication device 110 making and/or receiving calls, once provisioned, it is understood that the communication device 110 may be enabled to make and/or receive any suitable communication once provisioned, including but not limited to e-mails, text messages, telephone calls, and/or a combination, and/or any other suitable communication that will occur to a person of skill in the art.

Those skilled in the art will appreciate that in some embodiments, the functionality of the communication device 110 and the switch 120 can be implemented using preprogrammed hardware or firmware elements (e.g., application specific integrated circuits (ASICs), electrically erasable programmable read-only memories (EEPROMs), etc.), or other related components. In other embodiments, the functionality of the communication device 110 and the switch 120 can be achieved using a computing apparatus that has access to a code memory (not shown) which stores computer-readable program code for operation of the computing apparatus. The computer-readable program code could be stored on a computer readable storage medium which is fixed, tangible and readable directly by these components, (e.g., removable diskette, CD-ROM, ROM, fixed disk, USB drive). Alternatively, the computer-readable program code could be stored remotely but transmittable to these components via a modem or other interface device connected to a network (including, without limitation, the Internet) over a transmission medium. The transmission medium can be either a non-wireless medium (e.g., optical and/or digital and/or analog communications lines) or a wireless medium (e.g., microwave, infrared, free-space optical or other transmission schemes) or a combination thereof.

Persons skilled in the art will appreciate that there are yet more alternative implementations and modifications possible for implementing the embodiments, and that the above implementations and examples are only illustrations of one or more embodiments. The scope, therefore, is only to be limited by the claims appended hereto.

## Claims

1. A method for provisioning a communication device in communication with a switch within a communication system, comprising:
receiving a registration request from the communication device at the switch;
assigning a device identifier to the communication device, said device identifier uniquely identifying said communication device to the switch;
deriving an address identifier for the communication device based on said device identifier and a string associated with at least the switch, such that the communication device is registered within the communication system via said address identifier in order to initiate and receive communications via the communication system; and
assigning call handling attributes to the communication device, said call handling attributes comprising at least one of a class of service configuration and a class of restriction configuration and for association with any derived address identifier within the communication system.

2. The method of claim 1, wherein said device identifier is chosen from a plurality of unique device identifiers associated with the switch.

3. The method of claim 2, wherein said plurality of unique device identifiers are organized in a list and said device identifier is chosen from said plurality of unique device identifiers by choosing the next available unique device identifier in said list.

4. The method of claim 1, wherein said registration request comprises a type identifier identifying the communication device as a given type, and said device identifier is chosen from a plurality of unique device identifiers which have been associated with said given type.

5. The method of claim 1, further comprising authenticating the communicating device based on data included in said registration request.

6. The method of claim 1, further comprising receiving additional registration data, and assigning a new address identifier to the communication device based on said additional registration data, such that the communication device is identified via said new address identifier within the communication system, and optionally wherein said additional registration data comprises at least one of log-in data received via an input device associated with the communication device, said log-in data used to identify said new address identifier within a database in the communication system, and administrator data.

7. The method of claim 1, further comprising detecting that the communication device has been disconnected from the switch and one of: unregistering the communication device within the communication system such that said device identifier and said address identifier can be assigned to another communication device; or reserving said device identifier and said address identifier for assignment to the communication device when another registration request is received from the communication device.

8. The method of claim 1, wherein said deriving an address identifier is further based on a switch identifier uniquely identifying the switch within a plurality of switches.

9. The method of claim 8, wherein said string is associated with said plurality of switches.

10. The method of claim 1, further comprising transmitting the address identifier to the communication device for at least one of display or storage of the address identifier at the communication device.

11. A switch for provisioning a communication device in communication with a switch within a communication system, comprising:
an interface for receiving a registration request from the communication device; and
a processing unit enabled for:
assigning a device identifier to the communication device, said device identifier uniquely identifying said communication device;
deriving an address identifier for the communication device based on said device identifier and a string associated with at least the switch, such that the communication device is registered within the communication system via said address identifier in order to initiate and receive communications via the communication system; and
assigning call handling attributes to the communication device, said call handling attributes for association with any derived address identifier within the communication system.

12. The switch of claim 11, further comprising a memory for storing said string.

13. The switch of claim 11, wherein said interface is further enabled for communication with a database for storing said string and said address identifier.

14. The switch of claim 11, said interface and said processing unit further enabled for detecting that the communication device has been disconnected from the switch and one of: unregistering the communication device within the communication system such that said device identifier and said address identifier can be assigned to another communication device; or reserving said device identifier and said address identifier for assignment to the communication device when another registration request is received from the communication device.

15. A communication system for provisioning a communication device, comprising:
a switch comprising:
an interface for receiving a registration request from the communication device; and
a processing unit enabled for:
assigning a device identifier to the communication device, said device identifier uniquely identifying said communication device; and
deriving an address identifier for the communication device based on said device identifier and a string associated with at least the switch, such that the communication device is registered within the communication system via said address identifier in order to initiate and receive communications via the communication system; and
a database, in communication with said switch via said interface, said database for storing said device identifier, said string and said address identifier, said switch further enabled to transmit the address identifier to said database for storage and retrieval.
